# FASCICULE DE BREVET EUROPEEN

(11) **EP 0 893 086 B1**
(45) Date de publication et mention de la délivrance du brevet: **29.10.2003**
(21) Numéro de dépôt: 98401741.8
(22) Date de dépôt: 09.07.1998
(51) Int. Cl.: A47J 37/08

(54) **Grille-pain**
Brotröster
Toaster

(30) Priorité: 24.07.1997 FR 9709682
(43) Date de publication de la demande: 27.01.1999
(73) Titulaire: MOULINEX ESPANA S.A., 08021 Barcelone (ES)
(72) Inventeur: Arnedo, Julian, 08031 Barcelone (ES); Basora Sanjaun, Antonio, 08028 Barcelone (ES)
(74) Mandataire: Kiehl, Hubert

(56) Documents cités:
- WO-A-95/17122
- WO-A-96/21386
- DE-A- 3 048 173
- FR-A- 1 403 826
- US-A- 4 986 173
- US-A- 5 304 782
- US-A- 5 385 082

## Description

La présente invention se rapporte aux grille-pain comportant un boîtier renfermant une enceinte de grillage équipée d'un moyen de chauffage et dans laquelle est monté mobile selon une direction verticale un chariot porte-pain entre une position d'éjection du pain et une position de grillage en laquelle il peut être amené à l'encontre d'un ressort de rappel par une poignée montée mobile verticalement sur le boîtier et reliée à une extrémité du chariot par un entraîneur destiné à venir se fixer sur un dispositif de retenue déverrouillable placé dans la région basse de l'enceinte et solidaire d'un doigt susceptible d'actionner un interrupteur de fin de course qui commande l'alimentation électrique du moyen de chauffage.

Il a été décrit par exemple, dans le brevet français n0 2645424 déposé le 7 avril 1989 par la Demanderesse des grille-pain de ce type.

Les essais anormaux de qualité et d'endurance entrepris par la Demanderesse sur des tels grille-pain ont permis de mettre en défaut le fonctionnement de certains dans des situations particulières telles que le blocage du chariot porte-pain en position de grillage et inhibition du dispositif de sécurité interne. Ces deux dysfonctionnements provoquent, par la mise en marche continue de l'interrupteur de fin de course, l'alimentation permanente à pleine puissance du moyen de chauffage et donc la carbonisation de la tranche de pain introduite avec création de fumée. Si l'expérience est poursuivie à l'extrême, il arrive que cette tranche de pain se carbonise en produisant quelques flammes provoquant ainsi la destruction de l'appareil.

L'invention vise à remédier à ces inconvénients et à réaliser un grille-pain d'une extrême sécurité de fonctionnement.

Il est également connu, par le document US 5385082, un grille-pain du genre précité, où l'entraîneur est monté mobile sur l'extrémité du chariot selon une course verticale déterminée pour venir occuper une position de sécurité, de manière à permettre au doigt de libérer l'interrupteur lorsque le chariot reste bloqué en position de grillage après le déverrouillage du dispositif de retenue.

Par conséquent, grâce à cette liberté de déplacement obtenue par une liaison lâche permettant une course verticale de l'entraîneur, le doigt d'actionnement libère l'interrupteur quelque soit la cause du blocage du chariot en sa position de grillage, évitant ainsi les inconvénients exposés ci-dessus.

Toutefois, l'architecture de ce grille-pain est relativement complexe et peut être simplifiée.

Selon l'invention, l'entraîneur présente la forme d'une fourchette à deux branches formant respectivement des organes d'entraînement haut et bas, situés de part et d'autre de l'extrémité du chariot, espacés selon une direction verticale, en ménageant ladite course verticale, lesdits organes étant destinés à venir en prise alternativement et respectivement avec deux butées haute et basse agencées sur l'extrémité, ledit entraîneur comportant entre ses branches une tige verticale de guidage solidaire dudit entraîneur et sur laquelle est montée coulissante l'extrémité du chariot.

Un tel agencement de l'entraîneur offre une construction simple tout en n'étant relié au bâti que par le ressort de rappel, puisque la tige de guidage est liée à l'entraîneur.

Les caractéristiques et avantages de l'invention ressortiront de la description qui va suivre, prise à titre d'exemple non limitatif, en référence aux dessins annexés dans lesquels
- la figure 1 représente en coupe verticale un grille-pain selon l'invention avec un chariot porte-pain en position de grillage ;
- la figure 2 est une vue agrandie partielle du grille-pain illustrant un entraîneur selon l'invention reliant une poignée au chariot, ledit chariot étant en position d'éjection
- la figure 3 est une vue similaire à la figure 2, mais illustrant le chariot en position de grillage et l'entraîneur en position de sécurité.

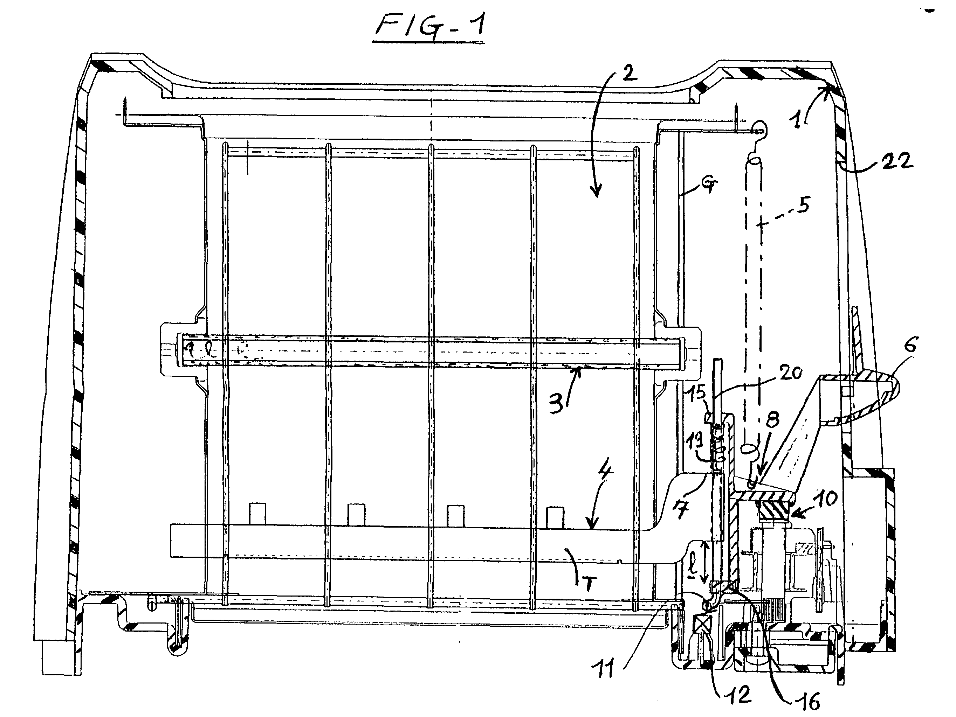

Comme représenté à la figure 1, le grille-pain comporte un boîtier 1 renfermant une enceinte de grillage 2 ouverte en sa partie supérieure pour permettre l'introduction d'un aliment tel qu'une tranche de pain et équipée d'un moyen de chauffage 3 réalisé, par exemple, par deux tubes chauffants à quartz disposés symétriquement par rapport à un plan médian vertical du boîtier.

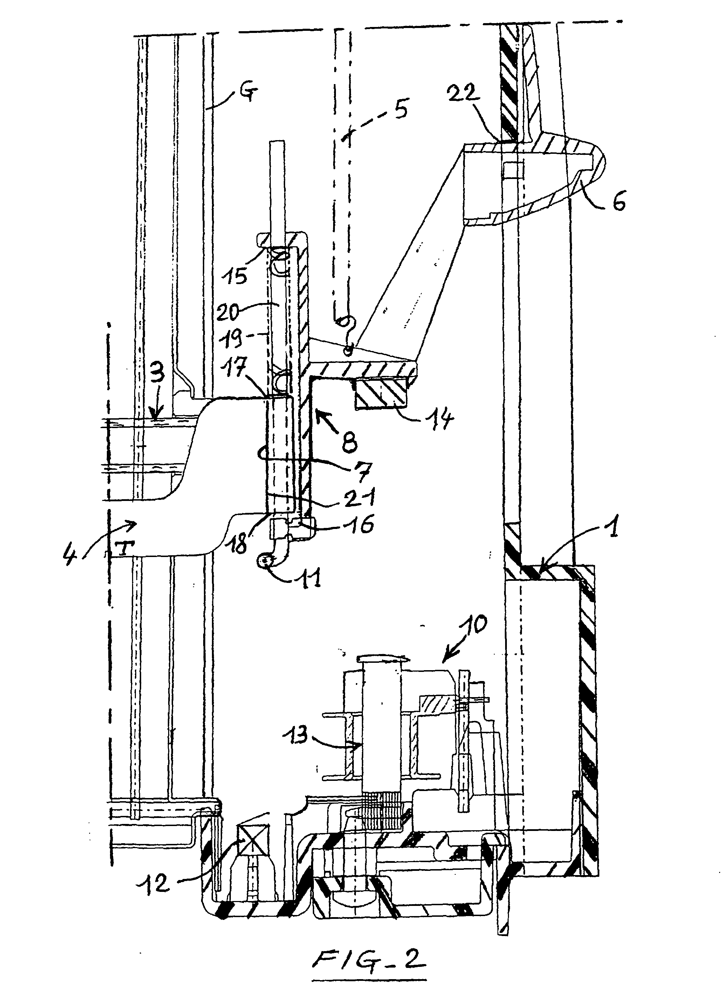

Dans cette enceinte 2 est monté mobile, selon une direction verticale sur une glissière schématisée en G, un chariot porte-pain 4 comprenant une traverse T s'étendant horizontalement et ayant une extrémité 7 reliée à une poignée 6 montée également mobile verticalement sur le boîtier. Ledit chariot 4 est ainsi monté mobile entre une position d'éjection du pain (figure 2) et une position de grillage (figure 1) en laquelle il peut être amené à l'encontre d'un ressort de rappel 5 par la poignée 6; la liaison mécanique entre la poignée 6 et l'extrémité 7 du chariot étant réalisée par un entraîneur 8. Cet entraîneur 8 est destiné également à venir se fixer sur un dispositif de retenue 10 deverrouillable par un dispositif de contrôle du degré de grillage de la tranche de pain, et placé dans le région basse de l'enceinte 2. Cet entraîneur 8 est solidaire d'un doigt 11 susceptible d'actionner un interrupteur de fin de course, schématisé en 12, qui commande l'alimentation électrique du moyen de chauffage 3.

Dans l'exemple de réalisation, le dispositif de retenue 10 comprend un électro-aimant 13 solidaire du boîtier 1 dont l'armature mobile 14 est solidaire de l'entraîneur 8. Un tel dispositif est par exemple décrit dans le Demande de brevet français n° 2740317 de la Demanderesse. Quant à l'interrupteur 12, il peut être du type à rupture brusque et comprend un levier mobile d'actionnement d'un contact mobile par rapport à un contact fixe, de sorte que ledit levier par son déplacement commande soudainement l'ouverture ou la fermeture des contacts.

L'entraîneur 8 est monté mobile sur l'extrémité 7 du chariot 4 selon une course verticale déterminée ℓ pour venir occuper une position de sécurité, de manière à permettre au doigt 11 de libérer l'interrupteur 12 lorsque le chariot reste bloqué en position de grillage après le déverrouillage du dispositif de retenue 10. Cette libération de l'interrupteur correspond à l'ouverture des contacts et donc à l'interruption de l'alimentation électrique du moyen de chauffage 3.

Selon l'invention et telle qu'illustrée aux figures, l'entraîneur 8 présente la forme d'une fourchette à deux branches horizontales formant respectivement des organes d'entraînement haut 15 et bas 16 situés de part et d'autre de l'extrémité 7 du chariot 4, espacés selon une direction verticale en ménageant ladite course verticale ℓ, et destinés à venir en prise alternativement et respectivement avec deux butées haute 17 et basse 18 agencées sur ladite extrémité 7

De façon à minimiser les jeux mécaniques entre les différentes pièces tout en assurant leur positionnement correct, la fourchette comporte entre ses branches une tige verticale de guidage 20 sur laquelle est montée coulissante l'extrémité 7 du chariot 4. A cet effet, l'extrémité 7 présente un bord roulé 21 formant fourreau et palier de glissement sur la tige 20. De plus, l'extrémité inférieure de cette tige porte le doigt 11.

Bien entendu, on pourrait réaliser différemment l'entraîneur 8 en formant, par exemple, dans une pièce solidaire de la poignée 6 un trou oblong vertical ayant une longueur axiale égale au moins à la course ℓ et constituant par ses bouts, les organes d'entraînement 15, 16, et dans l'extrémité 7 du chariot 4 un pion transversal de manière à pénétrer dans ledit trou et autorisant ainsi le déplacement vertical de la pièce selon la course ℓ par rapport audit pion.

Selon une autre caractéristique de l'invention, un ressort de compression 19 est agencé entre l'organe d'entraînement haut 15 et la butée haute 17. Ce ressort 19 est de préférence enfilé sur la tige de guidage 20, et permet d'obtenir notamment une liaison souple et amortie entre les différentes pièces.

Le fonctionnement du grille-pain va être décrit en supposant que l'utilisateur a déjà amené par action sur la poignée 6 selon un mouvement descendant, le chariot porte-pain 4 en sa position illustrée à la figure 1.

En cette position, l'entraîneur est retenu par l'électro-aimant 13 et l'organe d'entraînement haut 15 est en prise par l'intermédiaire du ressort 19 avec la butée haute 17 de l'extrémité 7 du chariot. La tige 20 et donc le doigt 11 actionne l'interrupteur 12, c'est-à-dire ferme les contacts et autorise l'alimentation du moyen de chauffage 3.

A la fin du cycle de grillage l'électro-aimant relâche l'entraîneur 8 qui est rappelé vers la région haute du boîtier par le ressort 5.

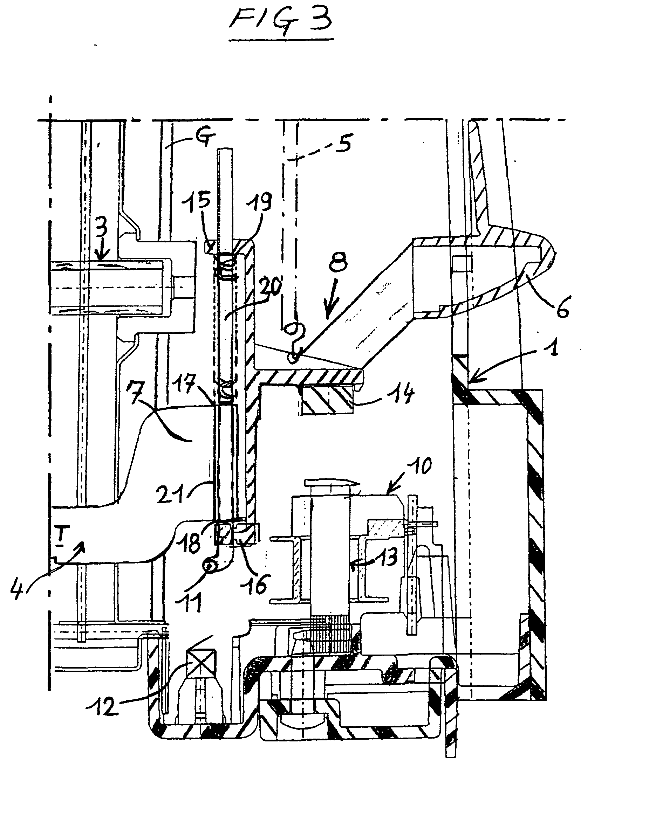

Dans le cas où le chariot 4 reste bloqué en position de grillage (figure 3) du fait, par exemple, d'un arc-boutement d'une tranche de pain sur le boîtier, et grâce à la liaison lâche entre l'entraîneur 8 et l'extrémité 7, ledit entraîneur se déplace donc vers le haut selon la course ℓ jusqu'à ce que la butée basse 18 vienne en prise avec l'organe d'entraînement bas 16 et vient occuper ainsi sa position de sécurité. Au cours de cette course, le doigt 11 libère l'interrupteur 12 et coupe donc l'alimentation électrique du moyen de chauffage 3 évitant ainsi tout risque lié à une surchauffe anormale de l'enceinte.

Outre ce dispositif de sécurité de fonctionnement lié à la réalisation particulière de l'entraîneur, le ressort 19 joue le rôle d'amortisseur de fin de course pour le chariot porte-pain 4 lorsque ce dernier est rappelé par le ressort de rappel 5 et tend à venir occuper normalement sa position d'éjection. En effet, le boîtier 1 comportant dans sa partie haute un butoir 22 pour la poignée 6, cette poignée est arrêtée brutalement et le chariot 4 propulsé violemment vers le haut continue sa course par inertie, provoquant la compression du ressort 19 et donc l'amortissement de sa course et son retour en sa position normale d'éjection.

## Revendications

1. Grille-pain comportant un boîtier (1) renfermant une enceinte de grillage (2) équipée d'un moyen de chauffage (3) et dans laquelle est monté mobile selon une direction verticale un chariot porte-pain (4) entre une position d'éjection du pain et une position de grillage en laquelle il peut être amené à l'encontre d'un ressort de rappel (5) par une poignée (6) montée mobile verticalement sur le boîtier et reliée à une extrémité (7) du chariot (4) par un entraîneur (8) destiné à venir se fixer sur un dispositif de retenue (10) déverrouillable placé dans la région basse de l'enceinte et solidaire d'un doigt (11) susceptible d'actionner un interrupteur (12) de fin de course qui commande l'alimentation électrique du moyen de chauffage (3), l'entraîneur (8) étant monté mobile sur l'extrémité (7) du chariot (4) selon une course verticale déterminée (ℓ) pour venir occuper une position de sécurité, de manière à permettre au doigt (11) de libérer l'interrupteur (12) lorsque le chariot reste bloqué en position de grillage après le déverrouillage du dispositif de retenue (10),
**caractérisé en ce que** l'entraîneur (8) présente la forme d'une fourchette à deux branches formant respectivement des organes d'entraînement haut (15) et bas (16), situés de part et d'autre de l'extrémité (7) du chariot (4), espacés selon une direction verticale, en ménageant ladite course verticale (ℓ), lesdits organes étant destinés à venir en prise alternativement et respectivement avec deux butées haute (17) et basse (18) agencées sur l'extrémité (7), ledit entraîneur comportant entre ses branches une tige verticale de guidage (20) solidaire dudit entraîneur et sur laquelle est montée coulissante l'extrémité (7) du chariot (4).

2. Grille-pain selon la revendication 1,
**caractérisé en ce qu'un** ressort de compression (19) est agencé entre l'organe d'entraînement haut (15) et la butée haute (17).

3. Grille-pain selon les revendications 1 et 2,
**caractérisé en ce que** le boîtier (1) comportant dans sa partie haute un butoir (22) pour la poignée (6), le ressort de compression (19) joue le rôle d'amortisseur de fin de course pour le chariot porte-pain (4) lorsque ce dernier est rappelé par le ressort de rappel (5) en sa position d'éjection.

## Patentansprüche

1. Toaster mit einem Gehäuse (1), das einen Röstraum (2) umschließt, der mit einem Heizmittel (3) ausgestattet ist und in dem entlang einer vertikalen Richtung ein Brothalterschlitten (4) zwischen einer Position zum Auswerfen des Brots und einer Röstposition beweglich angebracht ist, in welcher er durch einen Griff (6) gegen eine Rückstellfeder (5) gebracht werden kann, der an dem Gehäuse vertikal beweglich angebracht und mit einem Ende (7) des Schlittens (4) durch einen Mitnehmer (8) verbunden ist, der zur Fixierung an einer entriegelbaren Rückhalteeinrichtung (10) bestimmt ist, die in dem unteren Bereich des Raums angeordnet und mit einem Finger (11) fest verbunden ist, der einen Hubendeschalter (12) betätigen kann, der die elektrische Versorgung des Heizmittels (3) steuert, wobei der Mitnehmer (8) an dem Ende (7) des Schlittens (4) entlang eines bestimmten vertikalen Hubs (1) beweglich angebracht ist, um eine Sicherheitsposition einzunehmen, so daß der Finger (11) den Schalter (12) freigeben kann, wenn der Schlitten nach dem Entriegeln der Rückhalteeinrichtung (10) in der Röstposition blockiert bleibt, **dadurch gekennzeichnet, daß** der Mitnehmer (8) die Form einer Gabel mit zwei Zweigen aufweist, die ein oberes und ein unteres Mitnahmeorgan (15 bzw. 16) bilden, die beiderseits des Endes (7) des Schlittens (4) liegen und entlang einer vertikalen Richtung beabstandet sind, wobei sie den vertikalen Hub (1) vorsehen, wobei die Organe dazu bestimmt sind, abwechselnd mit einem oberen und einem unteren Anschlag (17 bzw. 18) in Eingriff zu gelangen, die an dem Ende (7) angeordnet sind, wobei der Mitnehmer zwischen seinen Zweigen einen vertikalen Führungsstift (20) aufweist, der mit dem Mitnehmer fest verbunden ist und an dem das Ende (7) des Schlittens (4) gleitend angebracht ist.

2. Toaster nach Anspruch 1, **dadurch gekennzeichnet, daß** eine Druckfeder (19) zwischen dem oberen Mitnahmeorgan (15) und dem oberen Anschlag (17) angeordnet ist.

3. Toaster nach den Ansprüchen 1 und 2, **dadurch gekennzeichnet, daß** das Gehäuse (1) in seinem oberen Teil einen Anschlag (22) für den Griff (6) aufweist und deshalb die Druckfeder (19) die Rolle eines Hubendedämpfers für den Brothalterschlitten (4) spielt, wenn dieser durch die Rückstellfeder (5) in seine Auswerfposition zurückgestellt wird.

## Claims

1. A toaster comprising a housing (1) containing a toasting enclosure (2) fitted with heater means (3) and in which a bread-carrier carriage (4) is mounted to move in a vertical direction between a toast-ejection position and a toasting position into which it can be moved against a return spring (5) by means of a handle (6) mounted to move vertically relative to the housing and connected to one end (7) of the carriage (4) by a drive coupling (8) for fixing on an unlockable retaining device (10) placed in the bottom region of the enclosure, the drive coupling being secured to a finger (11) suitable for actuating an end-of-stroke switch (12) controlling electrical power supply to the heater means (3), the drive coupling (8) being movably mounted on the end (7) of the carriage (4) to move over a determined vertical stroke (ℓ) so as to move into a safety position enabling the finger (11) to release the switch (12) when the carriage remains blocked in the toasting position after the retaining device (10) has unlocked, the toaster being **characterized in that** the drive coupling (8) is in the form of a fork having two prongs respectively forming a high drive member (15) and a low drive member (16), the prongs being situated on opposite sides of the end (7) of the carriage (4) being spaced apart in a vertical direction, and defining said vertical stroke (ℓ), said drive members being designed to engage alternatively and respectively with two abutments arranged on the end (7), namely a high abutment (17) and a low abutment (18), said drive coupling including a vertical guide rod (20) between its prongs, the rod being secured to said drive coupling and the end (7) of the carriage (4) being slidably mounted thereon.

2. A toaster according to claim 1, **characterized in that** a compression spring (19) is arranged between the high drive member (15) and the high abutment (17).

3. A toaster according to claims 1 and 2, **characterized in that** the housing (1) includes a stop (22) in its top portion for engaging the handle (6), and the compression spring (19) acts as an end-of-stroke damper for the bread-carrier carriage (4) when it is returned to its ejection position by the return spring (5).
